Europäisches Patentamt

(19) European Patent Office

Office européen des brevets

(11) Numéro de publication: **0 199 332**
**B1**

## (12) FASCICULE DE BREVET EUROPEEN

(45) Date de publication du fascicule du brevet:
24.10.90

(51) Int. Cl.⁵: **H04B 10/06**

(21) Numéro de dépôt: 86105515.0

(22) Date de dépôt: 22.04.86

---

(54) Récepteur de signaux optiques à très large bande.

---

(30) Priorité: 25.04.85 FR 8506332

(43) Date de publication de la demande:
29.10.86 Bulletin 86/44

(45) Mention de la délivrance du brevet:
24.10.90 Bulletin 90/43

(84) Etats contractants désignés:
DE FR GB IT NL

(56) Documents cités:
IEEE JOURNAL OF SOLID-STATE CIRCUITS, vol.
SC-19, no. 1, février 1984, pages 155-157, IEEE, New
York, US; A. ARBEL et al.: "Regular correspondence.
Low-noise high-speed optical receiver for fiber optic
systems"
IEEE TRANSACTIONS ON NUCLEAR SCIENCE; vol.
NS-19, no. 1, février 1972, pages 388-395, New York, US;
J.K. MILLARD et al.: "A broadband current preamplifier
configuration for obtaining high resolution energy and
time information from nuclear radiation detectors" 000
6th ECOC, PROCEEDINGS OF THE SIXTH EUROPEAN
CONFERENCE ON OPTICAL COMMUNICATION,
York, 16-19 septembre 1980, pages 222-225; IEEE,
Londres, GB; R.C. HOOPER et al.: "PIN-FET hybrid
optical receivers for longer wavelength optical
communications systems"detectors" 000

(73) Titulaire: ALCATEL CIT, 12 Rue de la Baume,
F-75008 Paris(FR)

(72) Inventeur: Folcke, Georges, 252 rue du faubourg Saint
Martin, F-75010 Paris(FR)
Inventeur: Cordier, Rose, 13 rue de la Perce Niege les
Limousines, F-78700 Conflans Sainte Honorine(FR)
Inventeur: Angremy, Jean-Claude, 26 Allée Louis
Caramiaux, F-78570 Andresy(FR)

(74) Mandataire: Weinmiller, Jürgen et al,
Lennéstrasse 9 Postfach 24, D-8133 Feldafing(DE)

## Description

La présente invention se rapporte à un circuit récepteur de signaux optiques, ledit récepteur étant destiné à fonctionner avec une très large bande passante, pouvant aller de quelques kilohertz à 3dB à environ 1 Gigahertz à 3dB, et même au-delà.

En matière de récepteurs optiques en général, il existe à l'heure actuelle deux types de structures le plus largement répandues :

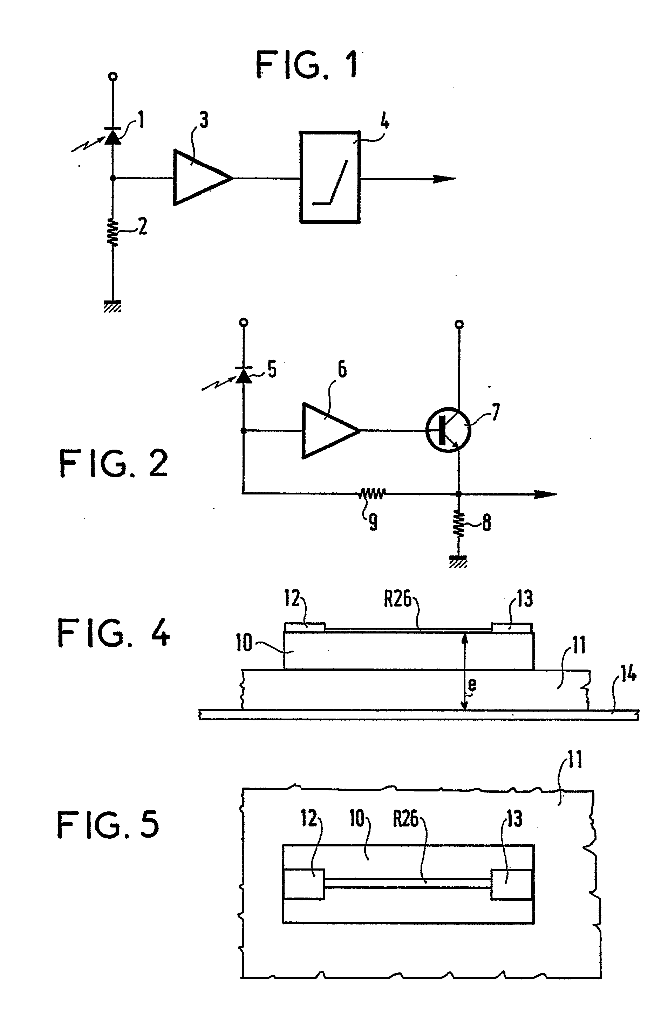

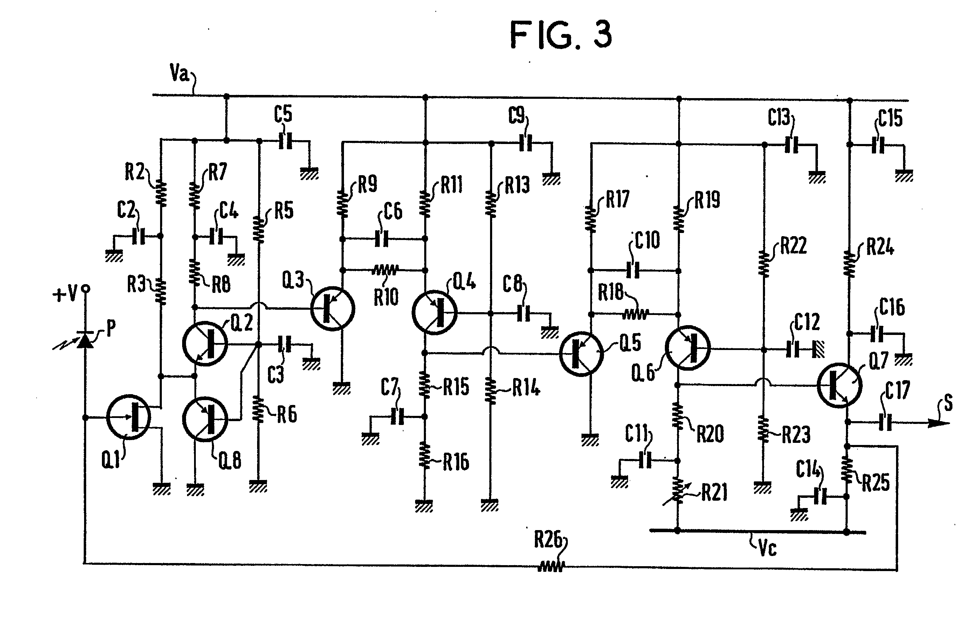

Un premier type de structure de récepteur optique, dite "structure par intégration" est tel que représenté schématiquement sur la figure 1 jointe. Une telle structure est couramment employée pour des fréquences de fonctionnement relativement basses, pouvant aller jusqu'à une centaine de Mégahertz pour fixer les idées.

Elle comporte un récepteur optique 1, par exemple une photodiode à avalanche ou PIN, associée à une résistance de charge 2, et un amplificateur électronique 3. La résistance 2, pour obtenir un rapport signal-sur-bruit acceptable, doit avoir une valeur élevée, de sorte qu'elle crée nécessairement, avec la capacité d'entrée de l'amplificateur 3, un pôle de coupure en filtre passe-bas. Il est alors classique de compenser ce pôle par un étage égaliseur 4, permettant de rejeter ce pôle en dessus de la bande de fréquences à transmettre, constitué classiquement par un transistor monté en émetteur-commun.

Un tel dispositif n'est pas adaptable aux récepteurs optiques à très large bande, car il nécessiterait un nombre d'étages égaliseurs en cascade trop élevé pour que le dispositif puisse fonctionner à des fréquences atteignant ou dépassant un Gigahertz. Par ailleurs, un dispositif comportant plusieurs égaliseurs en cascade est très difficile à régler, car l'on ne peut pas régler un égaliseur sans retoucher celui qui précède, ce qui le rend inadaptable à la production en grande série. Enfin, un tel dispositif, s'il doit fonctionner à des fréquences élevées, ne peut pas transmettre les voies de service basse-fréquence, puisqu'il se sature alors en basse-fréquence. Enfin, un tel dispositif est très sensible à la température, car il ne comporte aucun élément de régulation en la matière.

Un deuxième type connu de structure de récepteur optique, dite "structure par transimpédance", est tel que représenté schématiquement sur la figure 2 jointe. Un récepteur de ce type est par exemple vendu par la firme américaine LASERTRON sous la dénomination "PINFET RECEIVER MODULE". Il comporte, tel que représenté, une photodiode 5, telle qu'une diode PIN, un amplificateur 6 comportant par exemple un transistor FET suivi d'un transistor formant avec le premier un étage de type cascode, un étage de sortie adaptateur d'impédance comportant un transistor 7 monté en collecteur-commun sur une résistance de sortie 8, et enfin et surtout une résistance 9 de contre-réaction montée entre la sortie du transistor 7 et l'entrée de l'amplificateur 6.

Un tel circuit par transimpédance fonctionne de façon satisfaisante jusqu'à des fréquences pouvant aller jusqu'à plusieurs centaines de Mégahertz. Il fonctionne, jusqu'à ces fréquences, sans étage d'égalisation ajouté, et ne présente pas de problèmes de saturation en basse-fréquence et de tenue en température.

Par contre, on ne sait pas, à l'heure actuelle, faire fonctionner une telle structure par transimpédance pour des fréquences très élevées, car l'on ne peut pas, avec ce dispositif connu, placer à ces fréquences une résistance de contre-réaction 8 suffisamment élevée pour obtenir un rapport signal-sur-bruit acceptable, étant donné que l'on est en la matière limité par le gain insuffisant de l'amplificateur 6, et que l'on ne sait pas comment augmenter ce gain sans ajouter un nombre d'étages d'amplification prohibitif à ces fréquences élevées.

Rappelons en effet que la résistance de contre-réaction maximale Rmax d'un circuit par transimpédance est liée au gain A de l'amplificateur qu'il comporte, à sa capacité parasite Cp et á sa fréquence maximale à transmettre f par une relation de la forme:

$$Rmax = \frac{A + 1}{2 \pi \, Cp \cdot f}$$

Dans la mesure où il n'est pas possible d'obtenir un gain A suffisant, il n'est pas non plus possible d'obtenir une résistance Rmax suffisante pour qu'elle engendre un rapport signal-sur-bruit suffisamment élevé. A titre indicatif, pour une bande passante de 1 Gigahertz à 3dB et plus, il est nécessaire d'utiliser une résistance de contre-réaction de un kilohm et plus, ce qui sous-entend un gain A de l'ordre de 30 et plus, ce que l'on ne sait pas réaliser à ces fréquences à l'heure actuelle.

Il existe à l'heure actuelle des réalisations expérimentales qui, moyennant un choix très aigü des composants, permettent d'utiliser une résistance de contre-réaction d'une valeur de l'ordre de 600 ohms, mais pour faire fonctionner ce récepteur à 1 Gigahertz de bande, on est conduit à lui ajouter des étages égaliseurs en émetteur-commun, de sorte que l'on se trouve ramené au problème des réglages très longs et délicats de ces étages, et que finalement ce genre de dispositif n'est pas adaptable à la production industrielle en grande série.

Un article paru dans "IEEE JOURNAL OF SOLID-STATE CIRCUITS", (vol. SC-19, n° 1, février 1984, pages 155–157, IEEE New York, US; A. ARBEL et al.) et intitulé "Regular correspondence. Low-noise high-speed optical receiver for fiber optic systems" décrit un préamplificateur pour système à fibre optique comprenant

- une unité de transformation des signaux optiques incidents en signaux électriques;
- une unité électronique d'entrée ayant au moins une fonction d'amplification desdits signaux électriques, une résistance de charge de ladite unité d'entrée permettant d'accroître le gain en amplification de cette unité;
- un amplificateur à plusieurs étages et à très large bande, équipé d'au moins une liaison entre au moins son premier et son deuxième étage;
- une unité électronique de sortie ayant au moins une fonction d'adaptation.

Le récepteur de signaux optiques selon l'invention ne présente pas les inconvénients des dispositifs connus jusqu'alors, et est conçu pour passer une très large bande de fréquences, pouvant aller jusqu'à un gigahertz à 3dB, et même au-delà, tout en étant, du fait qu'il ne nécessite d'un circuit à l'autre aucun réglage long et délicat, bien adapté à la production industrielle en série. Il est du type comportant:

- une unité de transformation de signaux optiques incidents en signaux électriques,
- une unité électronique d'entrée ayant au moins une fonction d'amplification desdits signaux électriques,
  - un étage d'amplification,
- une résistance de charge de ladite unité d'entrée qui, pour accroître le gain en amplification de cette unité, est augmentée jusqu'à créer, avec la capacité d'entrée de l'étage d'amplification et dans sa bande de fréquences, un pôle de coupure en filtre passe-bas,
- une unité électronique de sortie ayant au moins une fonction d'adaptation, caractérisé en ce que, afin de lui permettre de fonctionner avec une très large bande de fréquences, allant de quelques kilohertz à 3dB jusqu'à au moins 1 gigahertz environ à 3dB,
- l'étage d'amplification est un amplificateur à plusieurs étages et à très large bande, comportant au moins une première unité d'entrée du type collecteur commun et base-commune, ou paraphase, suivie d'une seconde unité également du type paraphase,
- ledit amplificateur est équipé, pour compenser le pôle de coupure en filtre passe-bas, d'au moins une liaison, entre le premier étage et le second étage de la première unité d'entrée, constituée par un filtre passe-haut calculé pour rejeter ledit pôle au-delà de ladite bande de fréquence,
- une résistance de contre-réaction, ayant une valeur au moins égale à environ un kilohm, est disposée entre la sortie de l'unité de sortie et l'entrée de l'unité électronique d'entrée et est spécialement agencée et implantée de manière à présenter une faible capacité parasite, et en ce que ladite seconde unité paraphase est composée de deux étages reliés par une liaison constituée par un filtre passe-haut à pôle situé au-dessus de la bande de fréquences à transmettre.

L'invention sera mieux comprise à l'aide de la description suivante d'un exemple de réalisation, en référence aux dessins annexés dans lesquels:

- la figure 1, décrite précédemment, est une représentation schématique d'un récepteur optique "par intégration" de l'art antérieur
- la figure 2, décrite précédemment, est une représentation schématique d'un récepteur "par transimpédance" de l'art antérieur
- la figure 3 est un schéma électrique du récepteur optique à très large bande de l'invention
- la figure 4 est une vue latérale d'implantation de la résistance de contre-réaction équipant le dispositif de la figure 3

- la figure 5 est une vue de dessus d'implantation de la résistance de contre-réaction équipant le dispositif de la figure 3.

En se reportant tout d'abord à la figure 3, le récepteur optique à très large bande de l'invention comporte successivement:

- une photodiode P, telle qu'une photodiode à avalanche, polarisée par une tension continue V, et transformant en signaux électriques les signaux lumineux incidents,
- un transistor d'entrée Q1, par exemple un transistor FET à Arséniure de Gallium, dont la grille est connectée à la sortie de la photodiode P, dont la source est connectée à la masse, et dont le drain est connecté à une tension continue positive d'alimentation Va à travers des résistances de polarisation R3 et R2; comme on le voit sur le dessin, le point de jonction des résistances R2 et R3 est découplé à la masse par une capacité C2 afin d'éviter la création d'un pôle en filtre passe-bas qui serait dû à une résistance trop grande et à la capacité parasite de l'étage suivant,
- un second transistor Q2, par exemple un transistor NPN, monté avec le transistor Q1 en étage cascode, ce qui permet avantageusement de réduire l'effet Miller ; les transistors Q1 et Q2 constituent l'unité électronique d'entrée du récepteur ; comme on le voit sur le dessin, le transistor Q2 a son émetteur relié au drain du transistor Q1, sa base découplée à la masse par un condensateur C3 et polarisée par un pont diviseur constitué par deux résistances R5 et R6 connectées entre la tension Va et la masse et dont le point de jonction est relié à ladite base, et son collecteur relié à la tension Va par deux résistances R8 et R7 dont le point de jonction est découplé à la masse par le condensateur C4 ; les résistances R7 et R8 sont les résistances de polarisation du collecteur du transistor Q2, mais la résistance R8 constitue aussi la résistance de charge du circuit cascode, qui définit donc le gain de l'unité d'entrée ; conformément à l'invention, la résistance R8 est, pour obtenir une augmentation du gain de l'unité d'entrée Q1, Q2, augmentée jusqu'à créer avec la capacité parasite de l'étage suivant, un pôle de coupure en filtre passe-bas situé dans la bande à passer, par exemple situé à quelques centaines de Mégahertz ; la résistance R8 a par exemple une valeur de l'ordre de 150 ohms,
- un premier étage amplificateur à large bande, du type "collecteur-commun et base-commune", ou "paraphase", comportant un premier transistor Q3, de type PNP, dont la base est connectée au collecteur du transistor Q2, c'est-à-dire à la sortie de l'unité d'entrée (Q1, Q2), dont le collecteur est connecté à la masse, et dont l'émetteur est relié à la tension d'alimentation Va par l'intermédiaire d'une résistance de polarisation R9, ledit étage paraphase comportant également un deuxième transistor Q4, du type PNP, dont la base est découplée à la masse par un condensateur C8 et est polarisée comme représenté par un pont de résistances R13, R14, dont l'émetteur est relié à la tension d'alimentation Va par une résistance de polarisation R11 ; la liaison entre les émetteurs des transistors Q3 et Q4, c'est-à-dire entre les deux étages du paraphase est conformément à l'invention, constituée par une résistance R10 avec une capacité C6 en parallèle, tous deux calculés pour créer un pôle en filtre passe-haut rejetant au-dessus de la bande de fréquences à transmettre le pôle créé par la résistance R8: par exemple R10 est une résistance d'une vingtaine d'ohms et C16 une capacité de quelques picofarads; enfin, l'émetteur du transistor Q4 est relié à la masse par deux résistances de charge et polarisation R15 et R16 dont le point de jonction est découplé à la masse par une capacité C7, toujours pour éviter de créer un pôle avec la capacité d'entrée de l'étage suivant,

- un second étage amplificateur du type paraphase, rendu nécessaire dans cet exemple de réalisation pour obtenir un gain suffisant, comportant comme représenté un premier transistor PNP Q5 dont la base est reliée au collecteur de Q4, dont le collecteur est directement à la masse, et dont l'émetteur est relié à l'alimentation Va par l'intermédiaire d'une résistance de charge et polarisation R17, ledit étage paraphase comportant en outre un deuxième transistor PNP Q6 ; comme précédemment, le transistor Q6 à son émetteur relié à l'alimentation Va par une résistance de polarisation R19 et sa base découplée à la masse par une capacité C12 et polarisée par un pont de résistances R22 et R23 comme représenté ; son circuit de collecteur comporte une résistance de charge et polarisation R20 dont l'extrémité non reliée au collecteur de Q6 est découplée à la masse par une capacité C11 et reliée à une alimentation continue négative Vc par une résistance variable R21 dont le rôle sera expliqué ultérieurement ; la liaison entre les deux étages Q5 et Q6 de ce second paraphase est avantageusement effectuée par une résistance R18, avec capacité C10 en parallèle, calculés avantageusement pour rejeter au delà de la bande à transmettre d'éventuels pôles dus à d'éventuels parasites : par exemple R18 et C10 ont les mêmes valeurs que R10 et C6, créant ainsi un pôle en filtre passe-haut situé au-dessus de la bande à transmettre, leur fonction étant une pure fonction de sécurité, et non pas, comme étant le cas pour R10 et C6, une fonction de réjection d'un pôle volontairement engendré dans un étage précédent,

- un dernier étage de sortie en émetteur-suiveur classique comportant un transistor NPN Q7 dont la base est reliée au collecteur de Q6, donc à la sortie du second paraphase, dont le collecteur est découplé à la masse par une capacité C16 et est relié à l'alimentation Va par une résistance de polarisation R24, et dont l'emetteur est relié à l'alimentation Vc par une résistance de charge et polarisation R25 ; classiquement, l'émetteur de Q7 est relié à la borne de sortie S du récepteur par une capacité de liaison C17,

- une resistance de contre-réaction R26, branchée classiquement entre l'émetteur de Q7 et la grille de Q1, dont la valeur est portée, grâce au gain élevé obtenu (environ 30), à une valeur supérieure à 1 kilohm et pouvant même atteindre 4 à 5 kilohms.

Il est essentiel pour le fonctionnement du récepteur de l'invention d'une part d'avoir un bon découplage des alimentations, ce qui est réalisé, comme représenté, par les capacités de découplage C5, C9, C13 et C14, et d'autre part d'assurer une protection du transistor FET Q1 à la mise sous tension. Cette protection au démarrage est assurée, conformément à l'invention, d'une part par un transistor de démarrage Q8, de type PNP branché en parallèle comme représenté sur le transistor FET Q1 et le court-circuitant au démarrage, et d'autre part par la résistance variable R21 rendue grande au démarrage et diminuée manuellement progressivement ensuite de manière à n'appliquer la tension de polarisation de la grille de Q1 que progressivement.

Pour la réalisation de l'invention, il est enfin important que la résistance de contre-réaction R26 soit construite et implantée de manière à présenter la plus faible capacité parasite possible, étant bien entendu que d'autre part l'ensemble du circuit de la figure 3 est réalisé en fonction de la très haute fréquence à passer, par exemple par microassemblage et utilisation d'éléments hybrides, ce qui ne pose pas de sérieux problèmes pour l'homme de métier.

Les figures 4 et 5 représentent schématiquement un mode de réalisation et d'implantation possible de la résistance de contre-réaction R26 de l'invention.

Elle est réalisée sous forme d'une couche étroite et très allongée déposée sur un premier substrat d'alumine 10, lui-même collé sur le substrat isolant 11 servant de support à l'ensemble du circuit récepteur. Une feuille métallique 14 reliée à la masse est classiquement collée sous le substrat 11. La distance e entre la résistance R26 et la masse est ainsi de l'ordre de 1,5 à 2 millimètres, de sorte que sa capacité parasite est très faible. Comme représenté, la résistance R26 est terminée par deux larges bornes de connexion 12 et 13.

## Revendications

1. Récepteur de signaux optiques, du type comportant:
   - une unité (P) de transformation des signaux optiques incidents en signaux électriques,
   - une unité électronique d'entrée (Q1, Q2) ayant au moins une fonction d'amplification desdits signaux électriques,
   - un étage d'amplification,
   - une résistance de charge (R8) de ladite unité d'entrée qui, pour accroître le gain en amplification de cette unité, est augmentée jusqu'à créer, avec la capacité d'entrée de l'étage d'amplification et dans sa bande de fréquences, un pôle de coupure en filtre passe-bas,
   - une unité électronique de sortie (Q7) ayant au moins une fonction d'adaptation, caractérisé en ce que, afin de lui permettre de fonctionner avec une très large bande de fréquences, allant de quelques kilohertz à 3dB jusqu'à au moins 1 gigahertz environ à 3dB,
   - l'étage d'amplification est un amplificateur (Q3 à Q6) à plusieurs étages et à très large bande, comportant au moins une première unité d'entrée (Q3, Q4) du type collecteur commun et base-commune, ou paraphase, suivie d'une seconde unité (Q5, Q6) également du type paraphase,
- ledit amplificateur est équipé, pour compenser le pôle de coupure en filtre passe-bas, d'au moins une liaison (R10, C6), entre le premier étage (Q3) et le second étage (Q4) de la première unité d'entrée (Q3, Q4), constituée par un filtre passe-haut calculé pour rejeter ledit pôle au-delà de ladite bande de fréquence,
- une résistance de contre-réaction (R26), ayant une valeur au moins égale à environ un kilohm, est disposée entre la sortie de l'unité de sortie et l'entrée de l'unité électronique d'entrée et est spécialement agencée et implantée de manière à présenter une faible capacité parasite,
et en ce que ladite seconde unité paraphase est composée de deux étages (Q5, Q6) reliés par une liaison (R18, C10) constituée par un filtre passe-haut à pôle situé au-dessus de la bande de fréquence à transmettre.

2. Récepteur selon la revendication 1, du type selon lequel l'unité électronique d'entrée (Q1, Q2) comporte en entrée un transistor FET (Q1), caractérisé en ce qu'il comporte en outre un dispositif (Q8, R21) de protection du transistor FET (Q1) à la mise sous-tension.

3. Récepteur selon la revendication 2, caractérisé en ce que ledit dispositif de protection comporte un transistor (Q8) branché en parallèle sur ledit transistor FET (Q1).

4. Récepteur selon la revendication 2, caractérisé en ce que ledit dispositif de protection comporte un dispositif (R21) permettant une application progressive de tension d'alimentation.

5. Récepteur selon la revendication 3, caractérisé en ce que ledit dispositif de protection comporte en outre un dispositif (R21) permettant une application progressive de la tension d'alimentation.

**Claims**

1. An optical signal receiver, of the type comprising:
- a unit (P) for transforming incident optical signals into electrical signals;
- an electronic input unit (Q1, Q2) which at least amplifies said electrical signals,
  - an amplification stage,
  - a load resistor (R8) of said input unit, which in order to increase the amplification gain of said unit, is chosen to be as large as to constitute in conjunction with the input capacitance of the amplification stage and within the limits of its frequency band a cut-off pole of the low-pass filter, and
- an electronic output unit (Q7) having at least a matching function, characterized in that, in order to enable it to operate over a very wide frequency band ranging from a few kHz at 3 dB up to at least 1 GHz at about 3 dB,
- the amplification stage is a very large band multi-stage amplifier (Q3 to Q6), comprising at least a first input unit (Q3, Q4) for the common-collector and common basis or the paraphase type, followed by a second unit (Q5, Q6) likewise of the paraphase type,
- said amplifier is equipped with at least one link (R10, C6) between the first stage (Q3) and the second stage (Q4) of the first input unit (Q3, Q6) for compensating said low pass filter pole, said link being constituted by a high-pass filter designed to reject said pole to a frequency beyond said band of frequencies,
- that a negative feedback resistor (R26) having a value of at least one kiloohm is disposed between the output of the output unit and the input of the electronic input unit, and is specially arranged and implanted to have low stray capacitance,
- and that said second paraphase unit is composed of two stages (Q5, Q6) which are interconnected by a link (R18, ClO) constituted by a high-pass filter having a pole located beyond the frequency band to be transmitted.

2. A receiver according to claim 1, of the type in which the electronic input unit (Q1, Q2) comprises an input transistor (Q1) of the FET type, characterized in that it includes in addition a device (Q8, R21) for protecting the FET-transistor (Q1) during power switch-on periods.

3. A receiver according to claim 2, characterized in that said protection device includes a transistor (Q8) connected in parallel to said FET-transistor (Q1).

4. A receiver according to claim 2, characterized in that said protection device includes a device (R21) for gradually applying the power supply voltage.

5. A receiver according to claim 3, characterized in that said protection device further includes a device (R21) for gradually applying the power supply voltage.

**Patentansprüche**

1. Empfänger für optische Signale, der folgende Komponenten aufweist:
- eine Einheit (P) zum Umwandeln der einfallenden optischen Signale in elektrische Signale,
- eine elektronische Eingangseinheit (Q1, Q2), die zumindest verstärkend auf die elektrischen Signale einwirkt,
- eine Verstärkungsstufe,
- einen Lastwiderstand (R8) der Eingangseinheit, der zur Erhöhung des Verstärkungsgrads dieser Einheit so weit vergrößert wird, bis sich zusammen mit der Eingangskapazität der Verstärkungsstufe und innerhalb ihres Frequenzbandes einen Tiefpaß-Sperrpol bildet,
- eine elektronische Ausgangseinheit (Q7), die mindestens eine Anpassungsfunktion besitzt, dadurch gekennzeichnet, daß für einen Betrieb des Empfängers in einem sehr breiten Frequenzband, beginnend bei einigen kHz bei 3 dB und bis mindestens ein GHz bei 3 dB reichend,
- die Verstärkungsstufe aus einem mehrstufigen und sehr breitbandigen Verstärker (Q3 bis Q6) besteht, der mindestens eine erste Eingangseinheit (Q3, Q4) vom Typ Kollektor-Basis-Schaltung und Basisschaltung oder Paraphasenschaltung aufweist, der eine zweite Einheit (Q5, Q6) ebenfalls vom Typ der Paraphasenschaltung nachgeschaltet ist;

- wobei der Verstärker zur Kompensation des Tiefpaß-Sperrpols mit mindestens einer Verbindung (R10, C6) zwischen der ersten Stufe (Q3) und der zweiten Stufe (Q4) der ersten Eingangseinheit (Q3, Q4) versehen ist, die aus einem Hochpaßfilter besteht, das so berechnet ist, daß der genannte Pol in einen Bereich jenseits des genannten Frequenzbandes versetzt wird,

- daß ein Rückkopplungswiderstand (R26) mit einer Größe von mindestens 1 Kiloohm zwischen den Ausgang der Ausgangseinheit und den Eingang der elektronischen Eingangseinheit geschaltet ist und speziell derart angeordnet und eingebaut ist, daß er eine geringe Streukapazität besitzt,

und daß die zweite Paraphaseneinheit aus zwei Stufen (Q5, Q6) besteht, die durch eine Verbindung (R18, C10) miteinander verbunden sind, welche aus einem Hochpaßfilter mit einem oberhalb des zu übertragenden Frequenzbandes liegenden Pol besteht.

2. Empfänger nach Anspruch 1, bei dem die elektronische Eingangseinheit (Q1, Q2) am Eingang einen FET-Transistor (Q1) aufweist, dadurch gekennzeichnet, daß er weiter eine Anordnung (Q8, R21) zum Schutz des FET-Transistors (Q1) beim Einschalten aufweist.

3. Empfänger nach Anspruch 2, dadurch gekennzeichnet, daß die Schutzanordnung einen parallel zum FET-Transistor (Q1) geschalteten Transistor (Q8) aufweist.

4. Empfänger nach Anspruch 2, dadurch gekennzeichnet, daß die Schutzanordnung ein Mittel (R21) aufweist, das ein zunehmendes Anlegen der Versorgungsspannung ermöglicht.

5. Empfänger nach Anspruch 3, dadurch gekennzeichnet, daß die Schutzanordnung weiter ein Mittel (R21) aufweist, das ein zunehmendes Anlegen der Versorgungsspannung ermöglicht.

FIG. 1

FIG. 2

FIG. 4

FIG. 5

FIG. 3